# EUROPÄISCHE PATENTANMELDUNG

(11) **EP 1 672 588 A2**
(43) Veröffentlichungstag der Anmeldung: **21.06.2006**
(21) Anmeldenummer: 05023625.6
(22) Anmeldetag: 28.10.2005
(51) Int. Cl.: G06T 11/00

(54) **Vorrichtung zur Aufnahme und Wiedergabe einer Bilddarstellung eines neben oder hinter einem Fahrzeug liegenden Verkehrsraumes**

(30) Priorität: 17.12.2004 DE 102004060776
(71) Anmelder: AUDI AG, 85045 Ingolstadt (DE)
(72) Erfinder: Hallitschke, Frank, 85134 Stammham (DE)
(74) Vertreter: Thielmann, Frank

(57) **Zusammenfassung**

Vorrichtung zur Aufnahme und Wiedergabe einer Bilddarstellung eines neben oder hinter einem Fahrzeug liegenden Verkehrsraums, umfassend wenigstens ein Erfassungsmittel zur Verkehrsraumaufnahme mit zugeordneter Bildverarbeitungseinrichtung, sowie wenigstens eine Bildwiedergabeeinrichtung, wobei dass die Bildverarbeitungseinrichtung (3) zur automatischen Reduzierung des Detaillierungsgrads der aus den mit dem Erfassungsmittel aufgenommenen Daten erzeugbaren Bilddarstellung ausgebildet ist.

## Beschreibung

Die Erfindung betrifft eine Vorrichtung zur Aufnahme und Wiedergabe einer Bilddarstellung eines neben oder hinter einem Fahrzeug liegenden Verkehrsraums, umfassend wenigstens ein Erfassungsmittel zur Verkehrsraumaufnahme mit zugeordneter Bildverarbeitungseinrichtung, sowie wenigstens eine Bildwiedergabeeinrichtung.

Es ist bekannt, vornehmlich zur Überwachung eines hinter dem Fahrzeug liegenden Verkehrsraums eine Kamera zur Bildaufnahme vorzusehen, deren Bilder an einem Display, das im Bereich des Cockpits oder der Mittelkonsole integriert ist, dem Fahrer wiedergegeben werden. Solche "rear-view-Systeme" kommen im Zusammenhang mit Systemen, die das rückwärtige Einparken unterstützen sollen, zum Einsatz, es ist aber auch bekannt, diese Systeme als Ersatz für einen fahrzeugseitig vorgesehenen Rückspiegel zu integrieren. Dem Fahrer ist es möglich, wie bisher mittels des Rückspiegels über die Kamerabilddarstellung den rückwärtigen Verkehrsraum zu überwachen.

Die bekannten Displays sind, bedingt durch den begrenzten zur Verfügung stehenden Bauraum, relativ klein, woraus auch eine relativ kleine Bilddarstellung resultiert. Da die Kamera den realen Verkehrsraum aufnimmt und folglich an dem Display eine Darstellung des realen Verkehrsraums erfolgt, der unterschiedlichste Objekte, dargestellt in den unterschiedlichsten Farben und Kontrasten, zeigt, ergibt sich insbesondere aufgrund der begrenzten Größe der Bilddarstellung für den Fahrer das Problem, die relevanten Bildinformationen hinreichend deutlich und schnell erfassen zu können. Soll über ein solches Display-System nicht nur der mittige Rückspiegel, sondern auch der linke und/oder rechte Außenspiegel ersetzt werden, wäre, um dem Fahrer die Möglichkeit zur logischen Zuordnung zu geben, das jeweilige Display auch im linken oder rechten Cockpitbereich zu integrieren, wo der Bauraum eigentlich noch geringer ist und infolgedessen noch mehr Beschränkungen hinsichtlich der Displaygröße gegeben sind.

Der Erfindung liegt damit das Problem zugrunde, eine Vorrichtung anzugeben, die dem Fahrer ein einfaches, sicheres und schnelles Erfassen der gegebenen Verkehrssituation, die in einem Bild dargestellt wird, ermöglicht.

Zur Lösung dieses Problems ist bei einer Vorrichtung der eingangs genannten Art erfindungsgemäß vorgesehen, dass die Bildverarbeitungseinrichtung zur automatischen Reduzierung des Detaillierungsgrads der aus den mit dem Erfassungsmittel aufgenommenen Daten erzeugbaren Bilddarstellung ausgebildet ist.

Anders als bei bekannten Systemen erfolgt bei der erfindungsgemäßen Vorrichtung keine Darstellung des tatsächlich aufgenommenen Bildes, das den realen Verkehrsraum zeigt, sondern eines synthetischen, im Bildinhalt gewusst reduzierten Bildes, das über die Bildverarbeitungseinrichtung vorher so bearbeitet wurde, dass der Detaillierungsgrad reduziert ist. Die Bildverarbeitungseinrichtung ist erfindungsgemäß in der Lage, die im realen Bild gegebenen feinen Strukturen der im Bild gezeigten Objekte zu reduzieren, so dass das Bild deutlich weniger Einzeldetails enthält, die die Erkennbarkeit der wesentlichen Bildinformation nachteilig beeinträchtigen und die Aufmerksamkeit des Fahrers ablenken können. So ist es beispielsweise denkbar, seitlich im Bild gezeigte, die Fahrbahn begrenzende Baum- oder Gebüschbereiche, die unterschiedlichste Bäume, Gebüsche, Pflanzen und damit auch unterschiedlichste Farben und Strukturen zeigen, weitgehend zu reduzieren und Einzeldetails innerhalb dieses Bildbereichs quasi "einzuebnen", so dass dem Fahrer ein wesentlich weniger strukturiertes, wesentlich weniger Einzeldetails zeigendes, verfremdetes Rechenbild, in dem er alle relevanten Informationen schnell und sicher erfassen kann, dargestellt wird.

Die Bildverarbeitungseinrichtung kann erfindungsgemäß zur Reduzierung des Detaillierungsgrads durch Erzeugen von Flächen gleicher Farbe ausgebildet sein. Ausgehend von dem oben beschriebenen Beispiel, dass Baum- oder Buschbereiche im Kamerabild gezeigt sind, besteht nach dieser Erfindungsausgestaltung die Möglichkeit, dass die Bildverarbeitungseinrichtung diese Bereiche, die in einem Farbbild z.B. im Wesentlichen grün mit diversen Farbvariationen gezeigt sind, erkennt und diesen gesamten "Grünbereich" in einer einheitlichen Farbe als größere Fläche darstellt. Dies entspricht also einer Reduzierung der Farbänderungen innerhalb einer bestimmten Fläche mit ähnlichen Farben. Die Erfassung solcher ähnlichen Farbflächen kann auf einfache Weise durch eine Analyse der Grauwerte der aufgenommenen Bilddaten oder eine Histogrammanalyse erfolgen. Ähnlich kann bezüglich der im Bild gezeigten Fahrbahn vorgegangen werden. Diese ist mit diversen Schattierungen z.B. gräulich gezeigt, wobei auch hier diverse Unterschiede zwischen Fahrbahnbereichen aus unterschiedlichen Materialien gegeben sein können. Auch hier ist ohne weiteres die Erfassung dieses Bildbereichs möglich, so dass es im dargestellten Rechenbild in einheitlich grauer Färbung dargestellt werden kann.

In diesem Zusammenhang ist es besonders zweckmäßig, wenn die Bildverarbeitungseinrichtung zum Erkennen von Objekten innerhalb der anhand der Daten erzeugbaren Bilddarstellung und zum Erzeugen von Flächen gleicher Farbe innerhalb eines erkannten Objektbereichs ausgebildet ist. Diese Objekterkennung kann wie beschrieben anhand der entsprechenden Signalanalyse erfolgen, alternativ ist es auch denkbar, dies über geeignete Objektdetektionsalgorithmen wie Kantendetektionsalgorithmen etc. vorzunehmen, wobei hierzu das aus den real aufgenommenen Daten erzeugbare Bild analysiert wird. Beispielsweise grenzen sich Baum- oder Buschbereiche von der wesentlich helleren Fahrbahn und dem bei Tageslicht wesentlich helleren Himmel sehr deutlich ab, so dass sie ohne weiteres erfasst werden können. Bereits in diesem Zusammenhang ist darauf hinzuweisen, dass als Erfassungsmittel nicht nur eine übliche Kamera, z.B. eine CCD-Kamera eingesetzt werden kann, die zur Aufnahme von Tageslichtbildern dient. Vielmehr können als Erfassungsmittel auch Infrarotkameras oder Radarsensoren etc. eingesetzt werden, die gleichermaßen entsprechend verarbeitbare Bilddaten erzeugen und eine aufgelöste Bilddarstellung auch in der Dunkelheit zulassen. Hinsichtlich der rechnerisch ermittelten Bilddarstellung ergeben sich insofern keine Unterschiede, auch unter Verwendung solcher Erfassungsmittel sind entsprechende Flächen gleicher Farbigkeit, Objekterkennung etc. ohne weiteres möglich.

Zur besseren Erkennbarkeit ist es zweckmäßig, wenn die Bildverarbeitungseinrichtung zum Verändern des Bildkontrasts oder der Farbigkeit, insbesondere zwischen einer Fläche gleicher Farbe und einem benachbarten Bildbereich, insbesondere einer weiteren Fläche gleicher Farbe ausgebildet ist. Hierüber ist eine bewusste Kontrastverstärkung zwischen Flächenbereichen oder eine Verstärkung entsprechender Farbunterschiede zwischen den Flächenbereichen möglich. Wäre beispielsweise bei bedecktem, im realen Farbbild grauem Himmel und den Baum- oder Buschbereichen, die ebenfalls relativ dunkel sind, ein geringerer Kontrast bzw. ein geringerer Farbunterschied gegeben, so kann durch entsprechend auffällige Farbgebung ein im Wesentlich deutlicherer Farbunterschied erzeugt werden. Beispielsweise kann der Himmel, trotz realer Bedeckung, auffällig blau dargestellt werden, während die ebenfalls im realen Bild relativ dunklen Buschreihen in einem hellen grün gezeigt werden können. Entsprechendes gilt natürlich im Falle einer schwarz-weiß-Displaydarstellung. Auch hier könnte der Himmel, wenngleich real relativ dunkel, sehr hell gezeigt werden, während die Baum- oder Buschreihen in einem deutlichen Kontrast wesentlich dunkler gezeigt werden können. Entsprechendes gilt natürlich auch in Bezug auf die Fahrbahn oder sonstige im Bild gezeigte Elemente.

Alternativ oder zusätzlich zur beschriebenen Verfremdung durch Erzeugen von Flächen gleicher Farbe kann in Weiterbildung der Erfindung die Bildverarbeitungseinrichtung zum Erkennen von Objekten innerhalb der anhand der Daten erzeugbaren Bilddarstellung und zum Unterdrücken von Objekten in der auszugebenden Bilddarstellung ausgebildet sein. Die Bildverarbeitungseinrichtung weist hier einen Objekterkennungsalgorithmus auf, der das Erfassen von im realen Bild gezeigten Gegenständen, die zum relevanten, dem Fahrer zu gebenden Informationsgehalt nichts beitragen, ausgelegt ist. Beispielsweise ist es denkbar, hierüber eine Autobahn seitlich begrenzende Leitplanken zu erkennen. Solche Gegenstände, die eigentlich den Detaillierungsgrad erhöhen würden, in ihrem Informationsgehalt jedoch untergeordneter Natur sind, werden nach ihrer Erkennung erfindungsgemäß unterdrückt, sie werden also im Bild nicht gezeigt. Vielmehr wird an ihrer Stelle der unmittelbare Umgebungsbereich als "Ersatz" dargestellt. Im Falle der Leitplanken wird also beispielsweise die erkannte Fläche der Baum- oder Buschbereiche etwas vergrößert und auch in den Bereich der Leitplanke, wo diese originär wäre, gezogen. Die Unterdrückung von Leitplanken ist lediglich exemplarisch. Selbstverständlich ist es denkbar, beliebige andere Gegenstände zu unterdrücken. Werden beispielsweise bei einer Stadtfahrt neben den seitlichen Häuserreihen auch andere Gegenstände wie Personen, Ampeln etc. aufgenommen, ist es denkbar, auch diese zu erfassen und zu unterdrücken.

Weiterhin ist es erfindungsgemäß möglich, mittels der entsprechenden ausgebildeten Bildverarbeitungseinrichtung Objekte insbesondere in Form von Kraftfahrzeugen, gegebenenfalls aber auch in Form von Personen, innerhalb der anhand der Daten erzeugbaren Bilddarstellung zu erkennen und ein solches erkanntes Objekt in der ausgebbaren Bilddarstellung in einer anderen als der originär erfassten Größe wiederzugeben. Es besteht also die Möglichkeit, gezielt relevante Gegenstände wie beispielsweise hinter dem Auto fahrende Fahrzeuge größer wiederzugeben, und die Aufmerksamkeit des Fahrers noch stärker hierauf zu lenken.

Gemäß einer Weiterbildung der Erfindung kann die Bildverarbeitungseinrichtung ferner alternativ oder zusätzlich zum Erkennen von Objekten innerhalb der anhand der Daten erzeugbaren Bilddarstellung und zum Darstellen eines erkannten Objekts in verstärktem Kontrast oder verstärkter Farbigkeit bezogen auf benachbarte Bildbereiche ausgebildet sein. Diese Erfindungsausgestaltung ermöglicht es, einen Gegenstand, der möglicherweise bereits in einer gefahrbringenden Distanz zum eigenen Kraftfahrzeug fährt, hervorgehoben darzustellen, beispielsweise in signalroter Farbe, gegebenenfalls auch blinkend, so dass der Fahrer hierüber sogar in gewissem Maß alarmiert werden kann.

Zur Verbesserung des dreidimensionalen Effektes der eigentlich zweidimensionalen Bilddarstellung ist es weiterhin zweckmäßig, wenn die Bildverarbeitungseinrichtung zum Erzeugen eines künstlichen Lichteinfalls oder Schattenwurfs zu erkannten Objekten ausgebildet ist. Hierüber kann die Räumlichkeit der Darstellung verbessert werden.

Wie beschrieben bietet die erfindungsgemäße Vorrichtung die Möglichkeit, anstelle eines üblichen, rückwärts gerichteten Spiegels eine Bildwiedergabe eines aus einem realen Kamerabildes erzeugten Rechenbildes vorzunehmen. Das heißt, der übliche Spiegel kann entfallen. Dabei ist es zur Förderung der intuitiven Bilderfassung seitens des Fahrers besonders zweckmäßig, wenn die eine oder die mehreren Bildwiedergabeeinrichtungen derart ausgebildet oder lokal positioniert sind, dass unterschiedliche lokale Verkehrsräume dem Fahrer an lokal unterschiedlichen, jeweils einem Verkehrsraum logisch zugeordneten Orten darstellbar sind. Wird beispielsweise über eine erste Kamera der - bezogen auf die Fahrtrichtung - linke hintere Verkehrsraum, der über den linken Außenspiegel erfasst werden kann, aufgenommen, so würde im Falle einer Displaydarstellung das entsprechend zugeordnete Display im Cockpit im linken Bereich, also intuitiv-logisch an einer ähnlichen Position, wo der Fahrer den üblichen Außenspiegel vermutet, angeordnet sein. Im Falle einer zweiten Kamera, die den rechten hinteren Verkehrsraum erfasst, wäre das entsprechende Display im rechten Cockpitbereich, während bei Verwendung einer dritten Kamera, die den mittigen Verkehrsraum erfasst, das Display im Wesentlichen in der Mitte angeordnet wäre. Selbstverständlich ist es denkbar, auch nur eine Kamera zu verwenden, die einen entsprechend großen Objektbereich aufnimmt. In diesem Fall würde die Bildverarbeitungseinrichtung die entsprechenden Bildbereiche, die dem linken und rechten Außenspiegel und den mittigen Rückspiegel zugeordnet wären, entsprechend erkennen und an den jeweiligen Displays nur die jeweils zugeordneten Bildbereiche darstellen.

Als Bildwiedergabeeinrichtung kann wie beschrieben entweder ein stationäres Display, insbesondere ein TFT-Display oder ein OLED-Display - oder entsprechend mehrere solcher Displays - eingesetzt werden. Alternativ ist aber auch die Verwendung einer entsprechenden Projektionseinrichtung möglich, mittels der die Bilddarstellung auf eine oder mehrere ausgezeichnete Projektionsflächen projizierbar ist. Mittels dieser Projektionseinrichtung, die ihrer Art nach z.B. einem Beamer entspricht, würde die entsprechende Bilddarstellung auf eine ausgezeichnete Projektionsfläche, vornehmlich die Windschutzscheibe, projiziert werden, wo sie der Fahrer erkennen kann. Auch in diesem Fall ist es möglich, dass über die bevorzugt eine Projektionseinrichtung für den Fall, dass die beiden Außenspiegel und der Rückspiegel entfallen sollen, an entsprechenden linken, mittleren und rechten Projektionsflächen die jeweils diesen Bereichen zugeordneten Bilddarstellungen wiedergegeben werden.

Weitere Vorteile, Merkmale und Einzelheiten der Erfindung ergeben sich aus den im folgenden beschriebenen Ausführungsbeispielen sowie anhand der Zeichnungen. Dabei zeigen:
- Fig. 1: eine Prinzipdarstellung eines Kraftfahrzeugs zur Darstellung der Anordnung dreier Erfassungsmittel in Form von Kameras,
- Fig. 2: eine Prinzipdarstellung einer erfindungsgemäßen Vorrichtung,
- Fig. 3: ein real aufgenommenes Verkehrsraumbild und die mit der Bildverarbeitungseinrichtung erzeugte rechnerische Bilddarstellung,
- Fig. 4: ein weiteres real aufgenommenes Bild und die entsprechende rechnerische Bilddarstellung, und
- Fig. 5: ein Flussdiagramm zur Darstellung der Arbeitsweise der erfindungsgemäßen Vorrichtung.

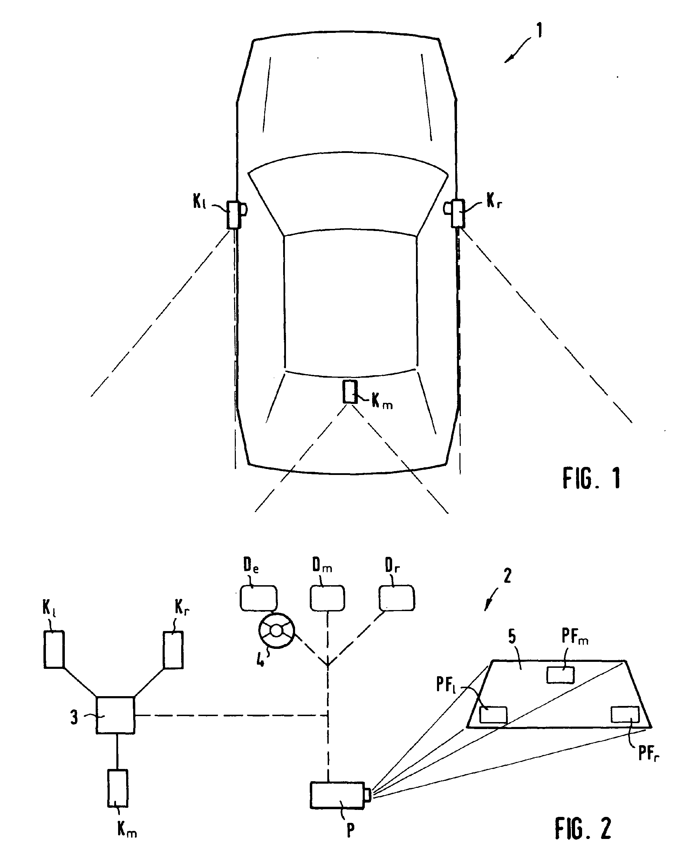

Fig. 1 zeigt ein erfindungsgemäßes Kraftfahrzeug 1, bei dem im gezeigten Ausführungsbeispiel insgesamt drei Erfassungsmittel in Form von CCD-Kameras vorgesehen sind, nämlich eine im Bereich der Heckscheibe angeordnete mittige Kamera Kₘ sowie in den Bereichen, wo üblicherweise die beiden Außenspiegel vorgesehen sind, integrierte Kameras, nämlich eine rechte Kamera Kᵣ und eine linke Kamera Kₗ. Zu den jeweiligen Kameras sind die einzelnen Erfassungsbereiche, die mittels der Kameras aufgenommen werden, dargestellt. Ersichtlich überlappen sich diese. Alle Kameras sind so gerichtet, dass der rückwärtige bzw. seitliche Verkehrsraum hinter bzw. neben dem Fahrzeug aufgenommen wird.

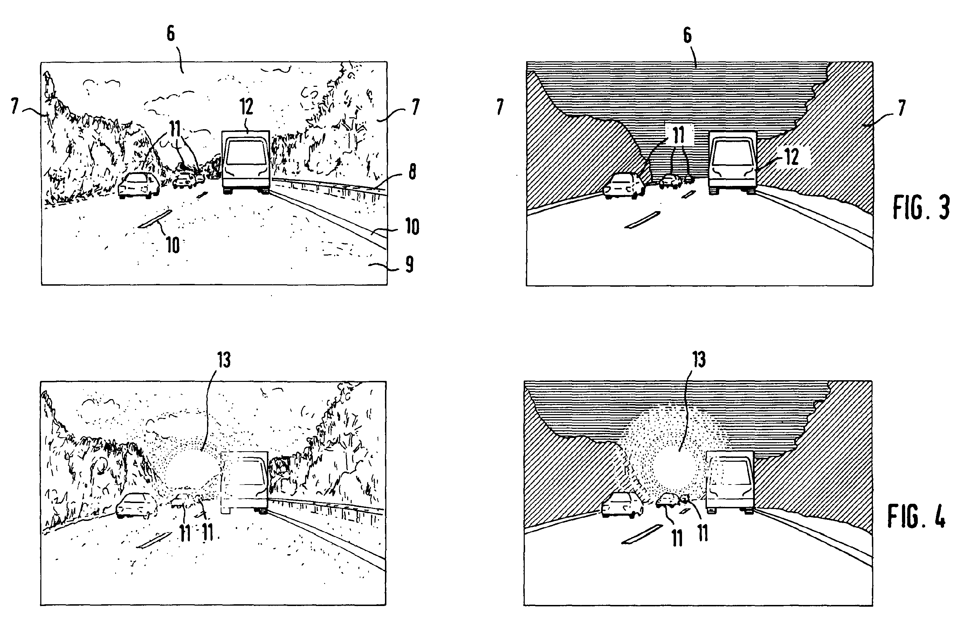

Der prinzipielle Aufbau der erfindungsgemäßen Vorrichtung 2 ist in Fig. 2 gezeigt. Dargestellt sind die drei Kameras Kₘ, Kᵣ und K_{l,} denen eine gemeinsame Bildverarbeitungseinrichtung 3 zugeordnet ist. Dieser werden die einzelnen realen Kamerabilddaten gegeben. Die Bildverarbeitungseinrichtung 3 erzeugt aus diesen Bilddaten jeder Kamera zugeordnet ein synthetisches Rechenbild, dessen Detaillierungsgrad stark reduziert wurde, so dass - worauf bezüglich der Figuren 3 und 4 noch eingegangen wird - eine sehr gering strukturierte, nur die wesentlichen Elemente bzw. Bildinhalte darstellende Bilddarstellung ausgegeben werden kann.

Zur Wiedergabe sind unterschiedliche Möglichkeiten denkbar, die beide in Fig. 2 als jeweilige Optionen dargestellt sind. Gezeigt sind zum einen drei Displays, von denen das Display Dₗ links im Fahrzeugcockpit (dargestellt durch das Lenkrad 4), das Display Dₘ mittig und das Display Dᵣ rechts am Cockpit vorgesehen ist. Es handelt sich bei diesem Displays z.B. um TFT- oder OLED-Displays. An diesen werden die jeweils mit der zugeordneten Kamera aufgenommenen, über die Bildverarbeitungseinrichtung 3 jedoch verfremdeten Rechenbilder dargestellt. Aufgrund der logischen Anordnung bzw. Verteilung der Displays über das Cockpit kann so dem Fahrer das mit der linken Kamera Kₗ aufgenommene Bild nach seiner rechnerischen Verarbeitung auch in einem linken Fahrzeugbereich, nämlich am linken Display Dₗ gezeigt werden, so dass er, wie er es von einem üblichen Außenspiegel kennt, an dieser Stelle oder in diesem Bereich den linken Verkehrsraum erkennen kann. Entsprechend wird ihm der mit der Kamera Kᵣ aufgenommene rechte Verkehrsraum nach rechnerischer Bildverarbeitung im rechten Fahrzeugbereich über das rechte Display Dᵣ dargestellt. Gleiches gilt betreffend den mittigen Verkehrsraum, aufgenommen über die mittlere Kamera Kₘ und dargestellt am mittigen Display Dₘ. Dieses Display kann, muss aber nicht unmittelbar im Cockpit bzw. dem Armaturenbrett integriert sein. Es ist auch denkbar, ein solches Display an der Stelle, wo üblicherweise der Rückspiegel angeordnet ist, zu positionieren.

Alternativ ist eine Projektionseinrichtung P gezeigt, die es ermöglicht, die einzelnen rechnerischen Bilddarstellungen auf Projektionsflächen zu projizieren. Diese sind bevorzugt an der Windschutzscheibe 5 vorgesehen. Es sind drei Projektionsflächen dargestellt, die linke Projektionsfläche PFₗ, die mittige Projektionsfläche PFₘ und die rechte Projektionsfläche PFᵣ. Auch hier wird der über die linke Kamera Kₗ aufgenommene Verkehrsraum dem Fahrer in einem linken Fahrzeugbereich über die Projektionsfläche PFₗ, der rechte mit der Kamera Kᵣ aufgenommene Verkehrsraum rechtsseitig mit der Projektionsfläche PFᵣ und der mittige, mit der Kamera Kₘ aufgenommene Verkehrsraum über die mittige, hier ebenfalls erhöht positionierte Projektionsfläche PFₘ dargestellt. Gezeigt ist lediglich eine Projektionseinrichtung, beispielsweise ein hinreichend leistungsstarker Beamer, der die einzelnen Projektionsflächen bedient. Denkbar ist natürlich auch, drei separate Projektionseinrichtungen P zu verwenden. Anstelle einer solchen Projektionseinrichtung, die unmittelbar auf windschutzscheibenseitig vorgesehene Projektionsflächen projiziert, ist auch der Einsatz einer Head-Up-Display-Ausgabe möglich. Generell sind grundsätzlich alle Wiedergabeeinrichtungen geeignet, die eine Wiedergabe der rechnerischen Bilddarstellungen ermöglichen.

Wie beschrieben ist die Bildverarbeitungseinrichtung zur automatischen Reduzierung des Detaillierungsgrads der aus den mit den drei Kameras Kₗ, Kₘ und Kᵣ aufgenommenen Bilddaten erzeugbaren Bilddarstellung ausgebildet. Die Figuren 3 und 4 zeigen diesbezüglich zwei Prinzipansichten, wie dies erfolgen kann. Fig. 3 zeigt links das beispielsweise mit der Kamera Kₘ aufgenommene Realbild, rechts das mittels der Bildverarbeitungseinrichtung 3 errechnete, synthetische und verfremdete Bild. Ersichtlich ist der Detaillierungsgrad des rechten Bildes um ein Vielfaches geringer als der des realen linken Bildes. Der im realen Bild gezeigte Himmel 6, der im Realbild hellblau wäre und mit weißen Wolken durchsetzt ist, ist in der rechnerischen Bilddarstellung einheitlich blau dargestellt, wobei die Farbe äußerst intensiv und auffällig gewählt ist. Es wurden also alle Farbnuancen und Variationen innerhalb des den Himmel 6 zeigenden Bildbereichs im Realbild reduziert und eine einheitlich eingefärbte Fläche als Himmelsdarstellung eingeblendet.

Entsprechend wurde mit den beiden rechts- und linksseitig gezeigten Baumbereichen 7 verfahren. Auch diese wurden als Objekte mittels eines seitens der Bildverarbeitungseinrichtung 3 implementierten Objekt- oder Kantendetektionsalgorithmus oder aber anhand der Graustufenverteilung erkannt. Im Realbild zeigen sich ebenfalls eine Vielzahl unterschiedlicher Strukturen und Farbvariationen, die sich in den entsprechenden Baumbereichen 7 in der rechnerischen Bilddarstellung nicht mehr finden. Auch hier wurde eine einheitlich eingefärbte Fläche erzeugt, deren Berandung weitgehend der Baumbereiche 7 im Realbild entspricht. Die Farbe ist einheitlich hellgrün und auffällig gewählt. Ersichtlich grenzt sie sich sehr deutlich vom Himmel 6 ab.

Weiterhin zeigt das Realbild links- und rechtsseitige, die Fahrbahn begrenzende Leitplanken bzw. Begrenzungen 8. Diese wurden seitens der Bildverarbeitungseinrichtung 3 ebenfalls erkannt. Ihr Informationsgehalt ist im Hinblick darauf, dass dem Fahrer der rückwärtige, sich nähernde Verkehr dargestellt werden soll, nur von sehr untergeordneter Bedeutung. Infolgedessen reduziert die Bildverarbeitungseinrichtung 3 den Detaillierungsgrad noch weiter, indem diese Leitplanken oder Begrenzungen 8 über einen entsprechenden Algorithmus erkannt werden und ausgeblendet werden. Sie sind in der rechnerischen Bilddarstellung nicht mehr enthalten, vielmehr wurden die jeweiligen Baumbereiche 7 nach unten gezogen.

Weiterhin zeigt das reale Bild die Fahrbahn 9, die normalerweise ebenfalls unterschiedliche graue Abschnitte aufweist. Auch diese Fahrbahn wird über einen entsprechenden Algorithmus in ihrer Begrenzung und als Objekt erkannt und in der rechnerischen Bilddarstellung einheitlich hellgrau gefärbt dargestellt. Ferner zeigt das reale Bild Fahrspurmarkierungen 10. Diese werden ebenfalls über einen entsprechenden Algorithmus seitens der Bildverarbeitungseinrichtung 3 erfasst und - anders als im Realbild, wo sie häufig aufgrund von Verschmutzungen etc. nicht allzu deutlich sichtbar sind - deutlich hervorgehoben in der rechnerischen Bilddarstellung wiedergegeben.

Weiterhin sind im Realbild mehrere Pkws 11 und ein Lkw 12 gezeigt, die ebenfalls in der rechnerischen Bilddarstellung dargestellt sind, jedoch nicht verfremdet, das heißt, sie entsprechen im Wesentlichen der Realdarstellung. Bei den Fahrzeugen handelt es sich um die eigentliche relevante Information, weshalb hier zweckmäßigerweise keine Kontrast- oder Farb- oder sonstige Detailreduzierung vorgenommen wird, so dass dem Fahrer die Möglichkeit gegeben ist, die Fahrzeuge möglichst genau in ihrer Art erkennen zu können, da hieraus für den Fahrer gegebenenfalls auch Rückschlüsse zu den einzelnen Fahrzeugen gezogen werden können. Die Fahrzeuge werden aber in jedem Fall im Rechenbild positionsgenau bezüglich der Fahrbahn dargestellt.

Wenngleich im gezeigten Beispiel die Fahrzeuge 11, 12 real dargestellt werden, besteht natürlich die Möglichkeit, diese auch anders darzustellen. Insbesondere wird ein Fahrzeug, das sich beispielsweise bereits gefährlich genähert hat, was über entsprechende Fahrerassistenzsysteme oder dergleichen erfasst werden kann, beispielsweise in rot oder blinkend dargestellt, um den Fahrer auf eine mögliche Gefahr hinzuweisen. Diese hervorgehobene Darstellung ist aber auch unabhängig davon, ob eine Gefahrensituation gegeben ist oder nicht, denkbar. Denn hierüber wird die Aufmerksamkeit des Fahrers gegebenenfalls weiter erhöht. Auch ist eine Veränderung der Grö-ßendarstellung der Fahrzeuge zueinander möglich.

Wie Fig. 3 zeigt, erstrecken sich die seitlichen Baumbereiche 7 quer über das gesamte reale Bild, nachdem die Fahrbahn offensichtlich eine Kurve beschreibt. Zur Verbesserung der Erkennbarkeit insbesondere der weiter entfernten Fahrzeuge ist es nun möglich und in Fig. 3 auch gezeigt, den Bereich der Baumabschnitte 7, der quasi "oberhalb" der Fahrbahn 9 verläuft, auszublenden. Ersichtlich steigert dies die Erkennbarkeit insbesondere der vor diesem Hintergrund fahrenden Fahrzeuge 11. Die Bildverarbeitungseinrichtung 3 ist also zum "Ausschneiden" von Bildbereichen ausgebildet, sofern dies der Erkennbarkeit relevanter Bildinformationen dient.

Fig. 4 zeigt im Wesentlichen die Situation aus Fig. 3, jedoch steht hier real die Sonne 13 sehr tief, es kommt zu einer Blendung. Wenngleich die Sonne 13 auch in der rechnerischen Bilddarstellung wiedergegeben ist, können jedoch die Blendwirkung und die daraus resultierenden Nachteile deutlich reduziert werden. Während im Realbild die beiden weiter entfernten Fahrzeuge 11, insbesondere das hinterste Fahrzeug 11, kaum sichtbar ist, kann dieses aufgrund der Farbigkeits- oder Kontrastveränderung in der rechnerischen Bilddarstellung wesentlich deutlicher hervorgehoben wiedergegeben werden, so dass es für den Fahrer gut sichtbar ist, während er in der realen Bildwiedergabe insbesondere das hintere Fahrzeug kaum erkennen kann. Da durch die Bildverarbeitung die Möglichkeiten gegeben sind, Objekte gezielt zu erfassen und Bilddaten gezielt manipulieren zu können, besteht somit vorteilhaft die Möglichkeit, auch solche Schwierigkeiten, die die Erfassung von Strukturen erschweren, zu reduzieren bzw. zu vermeiden.

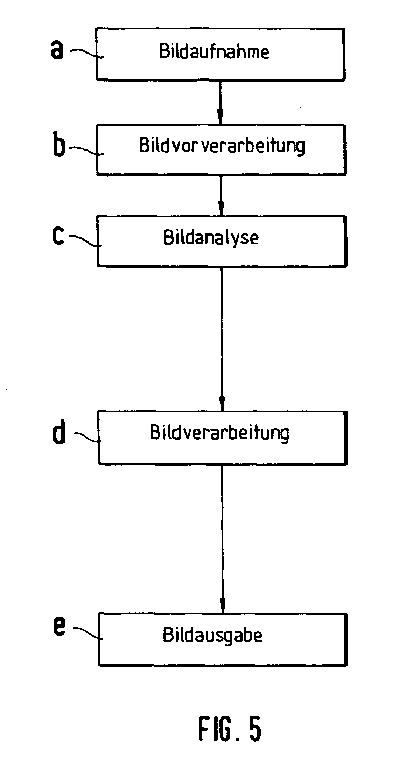

Fig. 5 zeigt schließlich ein Flussdiagramm, das die zentralen Schritte zeigt. Im Schritt a erfolgt zunächst die Bildaufnahme über eine der Kameras, wobei hier anzumerken ist, dass nicht zwingend drei Kameras vorzusehen sind, gegebenenfalls kann auch mit nur einer Kamera, vorzugsweise der mittigen, gearbeitet werden. Im Schritt b erfolgt eine Bildvorverarbeitung. Hier erfolgt eine Signalglättung, das heißt, die aufgenommenen Bildsignale werden von Rauschanteilen unter Verwendung geeigneter Filter befreit.

Im Schritt c erfolgt die Bildanalyse, im Rahmen welcher beispielsweise rückwärtige Verkehrsobjekte erkannt werden, der Verkehrsraum analysiert wird, über Kantendetektionsalgorithmen die beschriebenen Gegenstände wie Leitplanken, Markierungsstreifen etc. erfasst werden etc. Auf Basis dieser Informationen erfolgt im Schritt d die Bildverarbeitung, im Rahmen welcher dann die Flächen gleicher Farbe ermittelt werden, die Kontrastunterschiede eingestellt werden, Objektgrößen bestimmt werden etc., also alle Rechenschritte ablaufen, die der Detailreduktion und Erhöhung der Erkennbarkeit der Bildinformationen dienen.

Schließlich erfolgt im Schritt e die Bildausgabe, wobei dies wie beschrieben anhand der unterschiedlichen Wiedergabemöglichkeiten (Display, Head-Up-Display, Projektion über Beamer oder Laser etc.) erfolgt.

## Patentansprüche

1. Vorrichtung zur Aufnahme und Wiedergabe einer Bilddarstellung eines neben oder hinter einem Fahrzeug liegenden Verkehrsraums, umfassend wenigstens ein Erfassungsmittel zur Verkehrsraumaufnahme mit zugeordneter Bildverarbeitungseinrichtung, sowie wenigstens eine Bildwiedergabeeinrichtung,
**dadurch gekennzeichnet,**
**dass** die Bildverarbeitungseinrichtung (3) zur automatischen Reduzierung des Detaillierungsgrads der aus den mit dem Erfassungsmittel aufgenommenen Daten erzeugbaren Bilddarstellung ausgebildet ist.

2. Vorrichtung nach Anspruch 1,
**dadurch gekennzeichnet, dass**
dass die Bildverarbeitungseinrichtung (3) zur Reduzierung des Detaillierungsgrads durch Erzeugen von Flächen gleicher Farbe ausgebildet ist.

3. Vorrichtung nach Anspruch 2,
**dadurch gekennzeichnet,**
**dass** die Bildverarbeitungseinrichtung (3) zum Erkennen von Objekten innerhalb der anhand der Daten erzeugbaren Bilddarstellung und zum Erzeugen von Flächen gleicher Farbe innerhalb eines erkannten Objektbereichs ausgebildet ist.

4. Vorrichtung nach Anspruch 2 oder 3,
**dadurch gekennzeichnet,**
**dass** die Bildverarbeitungseinrichtung (3) zum Veränderung des Bildkontrasts oder der Farbunterschiede zwischen einer Fläche gleicher Farbe und einem benachbarten Bildbereich, insbesondere einer weiteren Fläche gleicher Farbe ausgebildet ist.

5. Vorrichtung nach einem der vorangehenden Ansprüche,
**dadurch gekennzeichnet,**
**dass** die Bildverarbeitungseinrichtung (3) zum Erkennen von Objekten innerhalb der anhand der Daten erzeugbaren Bilddarstellung und zum Unterdrücken von Objekten in der auszugebenden Bilddarstellung ausgebildet ist.

6. Vorrichtung nach einem der vorangehenden Ansprüche,
**dadurch gekennzeichnet,**
**dass** die Bildverarbeitungseinrichtung (3) zum Erkennen von Objekten insbesondere in Form von Kraftfahrzeugen (11, 12) innerhalb der anhand der Daten erzeugbaren Bilddarstellung und zum Darstellen derselben in der ausgebbaren Bilddarstellung in einer anderen als der originär erfassten Größe ausgebildet ist.

7. Vorrichtung nach einem der vorangehenden Ansprüche,
**dadurch gekennzeichnet,**
**dass** die Bildverarbeitungseinrichtung (3) zum Erkennen von Objekten innerhalb der anhand der Daten erzeugbaren Bilddarstellung und zum Darstellen eines erkannten Objekts in verstärktem Kontrast oder verstärkter Farbigkeit bezogen auf benachbarte Bildbereichs ausgebildet ist.

8. Vorrichtung nach einem der vorangehenden Ansprüche,
**dadurch gekennzeichnet,**
**dass** die Bildverarbeitungseinrichtung (3) zum Erzeugen eines künstlichen Lichteinfalls oder Schattenwurfs zu erkannten Objekten ausgebildet ist.

9. Vorrichtung nach einem der vorangehenden Ansprüche,
**dadurch gekennzeichnet,**
**dass** die eine oder die mehreren Bildwiedergabeeinrichtung (Dₗ, Dₘ, Dᵣ, P, PFₗ, PFₘ, PFᵣ) derart ausgebildet oder lokal positioniert sind, dass unterschiedliche lokale Verkehrsräume dem Fahrer an lokal unterschiedlichen, jeweils einem Verkehrsraum logisch zugeordneten Orten darstelllbar sind.

10. Vorrichtung nach Anspruch 9,
**dadurch gekennzeichnet,**
**dass** eine Bildwiedergabeeinrichtung eine Projektionseinrichtung (P) ist, mittels der die Bilddarstellung auf eine oder mehrere ausgezeichnete Projektionsflächen (PFₗ, PFₘ, PFᵣ) projizierbar ist.

11. Vorrichtung nach Anspruch 9,
**dadurch gekennzeichnet,**
**dass** eine Bildwiedergabeeinrichtung ein stationäres Display (Dₗ, Dₘ, Dᵣ,), insbesondere ein TFT- oder ein OLED-Display ist.
